# EUROPEAN PATENT APPLICATION

(11) **EP 1 662 647 A2**
(43) Date of publication of application: **31.05.2006**
(21) Application number: 05257379.7
(22) Date of filing: 30.11.2005
(51) Int. Cl.: H02P 6/00, B62D 5/04

(54) **Power steering control device and power steering control method**

(30) Priority: 30.11.2004 JP 2004346726
(71) Applicant: NSK LTD., Shinagawa-ku, Tokyo (JP)
(72) Inventor: Arai, Kenji, Maebashi-shi Gunma 371-8527 (JP)
(74) Representative: Cross, James Peter Archibald

(57) **Abstract**

The present invention is a power steering control device, which calculates a control target current value of the driving current to drive a motor based on a steering torque applied on a steering, and at the same time, applies a PWM driving current modulated in pulse width on the steering by using a predetermined PWM base wave based on the control target current value, and comprises reading means to read at least one of a torque signal representing the steering torque, a signal representing the PWM driving current, and a signal representing a terminal voltage of the motor; and control processing means to calculate the target current value based on the signal read by the reading means, wherein the reading means and the control processing means execute the processing for every plurality of cycles of the PWM base wave.

## Description

### BACKGROUND OF THE INVENTION

### Field of the Invention

The present invention fully relates to a power steering device, a method and a program thereof, which can reduce a load of signal processing by performing an interrupt processing synchronized for every plurality of cycles of PWM base wave.

### Related Background Art

In general, as a power assist steering device for an automobile, an electric power steering device using the torque of an electric motor has been utilized. This power steering device is configured by a torque sensor to detect the operation of a handle by a driver and the movement of an automobile, an electric power steering control unit (ECU) to calculate the power assist steering force based on a detection signal from the torque sensor, an electric motor to generate a running torque based on an output signal from the ECU, a reduction gear to transmit a running torque to a steering mechanism, and the like.

In the power steering device thus configured, when the driver operates the steering, the torque is applied on the torque sensor, and a torque signal according to the strength of the torque is outputted to an A/D converter inside the ECU. The ECU calculates a current-command value based on the torque signal which is A/D converted, and generates motor driving current by performing a pulse width modulation (hereafter referred to as PWM) according to this current-command value. By supplying this motor driving current to a motor, the power assist steering torque is applied on the steering.

### SUMMARY OF THE INVENTION

As described above, the ECU must execute various processings such as a PWM processing, an A/D conversion of the torque signal and the like, a current-command value calculation, a fail safe function and the like at an appropriate timing. Particularly, the control of a brush-less motor requires an enormous amount of calculation loads and interrupts processings in respect of a calculation amount and a calculation cycle. However, if the interrupt processing is permitted without limit, the processing load of the calculation device is increased, and a stable control becomes difficult.

The present invention has been made in view of the above described problem, and an object of the invention is to reduce a calculation load by executing an A/D conversion processing and a control calculation processing in synchronization with a plurality of cycles of the PWM base wave.

To solve the above described problem, the present invention calculates a control target current value of driving current to drive a motor based on a steering torque applied on the steering, and at the same time, the power steering control device to apply a PWM driving current modulated in pulse width on the steering by using a predetermined PWM base wave based on the control target current value, comprises:
reading means to read at least one of a torque signal representing the steering torque, a signal representing the PWM driving current, and signal representing a terminal voltage of the motor; and
control processing means to calculate the target current value based on the signal read by the reading means,
wherein the reading means and the control processing means execute the processing by the cycle plural times the PWM base wave.

The reading means and the control processing means execute the processing for the cycle plural times the PWM base wave, and in a constant timing in the PWM base wave.

Further, at least either one of the reading means and the control processing means starts the processing by the interrupt processing. The control processing means executes the processing after the processing in the reading means is completed. The reading means determines anomaly of the processing in case the processing is not to be completed within a predetermined time.

An excitation signal synchronized with the PWM base wave is supplied to a resolver provided in the motor, and the detection signal from the resolver is read by the reading means.

The reading means is comprised of an A/D converter.

Further, the present invention comprises the A/D converter to A/D convert at least either one of a torque signal from the torque sensor to detect the steering torque applied on the steering and a driving current signal representing the driving current toward a power assist torque generating motor; a control processing unit to calculate the control target current value based on the torque signal and the driving current signal; a PWM controller to generate normal phase and reverse phase PWM pulse signals by using the PWM base wave of a predetermined frequency based on the control target current value and, at the same time, adding a dead time in which two switch elements are simultaneously turned off to the normal phase and/or reverse phase PWM pulse signal; a duty command value calculation unit to calculate a PWM duty command value according to the control target value; and a current driving circuit connected between a high potential and a low potential and comprising at least two switch elements to generate the driving current by performing a power assist operation based on the PWM pulse signal, and the A/D converter executes the A/D conversion within a time equivalent to the dead time.

The A/D converter executes the processing for every plurality of cycles of the PWM base wave, and in a constant timing in the PWM base wave.

Further, the control processing unit starts the processing after the processing in the A/D converter is completed. The control processing unit renews the control target current value for every plurality of cycles of the PWM base wave. Further, the integral multiples of the cycle of the PWM base wave are set approximately to one msec.

The inverse of the execution cycle of the control processing unit is a divisible value.
Further, a duty register to decide the duty of the PWM base wave is provided, and a renewal cycle of the duty register is shorter than a duty calculation cycle by the control processing means.

Further, the power steering device to calculate the control target current value of the driving current to drive the motor based on the steering torque applied on the steering, and, at the same time, applies a PWM driving current modulated in pulse width on the steering by using the predetermined PWM base wave based on the control target current value comprises:
reading means to A/D convert and read at least one of a torque signal representing the steering torque, a signal representing the PWM driving current, and a signal representing the terminal voltage of the motor; and control processing means to calculate the target current value based on the signal read by the reading means,
wherein the reading means completes the A/D conversion within a time below half a cycle of the PWM base wave.

According to the present invention, the reading means reads at least either one of the torque signal, the signal represent the PWM driving current, and the signal representing the terminal voltage of the motor, and based on the signal read by the reading means, calculates the current target value. These reading means and control processing means execute the processing for every plurality of cycles of the PWM base wave, and therefore, comparing with a case of performing the processing for every plurality of cycles of the PWM base wave, can reduce a calculation load. Hence, a stabilized power steering control can be realized.

Further, a reading processing and a control processing are executed for every plurality of cycles of the PWM base wave and in a constant timing in the PWM base wave, so that an unnecessary interrupt can be controlled to the minimum.

Further, the control processing means executes the processing after the processing in the reading means is completed, and the reading means forcibly completes the processing in case the processing is not completed within the predetermined time. Hence, even in case a long period of time is required for the reading processing because of something abnormal, no pressure is exerted on the time of the control processing as well as other processings.

The excitation signal in synchronization with the PWM base wave is supplied to the resolver provided in the motor, and the detection signal from the resolver is read by the reading means, so that the detection signal can be read at the same timing with other signals.

Further, according to another mode of the present invention, the PWM controller adds the dead time, in which two switch elements are turned off at the same time, to a PWM pulse signal, and the A/D converter executes the A/D conversion within a time equivalent to the dead time. Since it is at a period of time to the extent of the dead time when the driving current of the motor is stabilized, the A/D conversion is executed within this time, so that the driving current can be stably detected.

Further, the A/D converter executes the processing for every plurality of cycles of the PWM base wave, and in a constant timing in the PWM base wave, so that an unnecessary interrupt can be controlled to the minimum.

Further, the integer number times the cycle of the PWM base wave is set approximately to one msec. Hence, the motor control can be executed, while avoiding an interference with the processings other than the motor control in an ECU for automobile use.

Further, by making the reverse number of the execution cycle of the control processing unit a divisible value, an error of the coefficient of a digital filer can be reduced. Further, by making a renewal cycle of the duty register shorter than a duty calculation cycle by the control processing means, a stabilized control can be performed.

Further, since the reading means completes the A/D conversion within a time below half a cycle of the PWM base wave, a stabilized control can be performed, and at the same time, a timing management of the A/D conversion can be easily performed.

### BRIEF DESCRIPTION OF THE DRAWINGS

FIG. 1 is a schematic diagram of a power steering device according to a first embodiment of the present invention;
FIG. 2 is a block diagram of the power steering control device according to the first embodiment of the present invention;
FIG. 3 is a block diagram representing a control calculation processing according to the first embodiment of the present invention;
FIG. 4 is a block diagram of a PWM controller according to the first embodiment of the present invention;
FIG. 5 is a timing chart of a PWM base timer, a pulse signal and the like according to the first embodiment of the present invention;
FIG. 6 is a timing chart of a PWM base timer, a pulse signal and the like according to the first embodiment of the present invention;
FIG. 7 is a graph representing a relation among a duty ratio of a compare register, a pulse signal, a dead time according to the first embodiment of the present invention;
FIG. 8 is a graph representing a relation among a duty ratio of a compare register, a pulse signal, a dead time according to the first embodiment of the present invention;
FIGS. 9A, 9B and 9C are timing chart representing a relation among a compare register, a dead time register, a triangular wave, and the pulse signal according to the first embodiment of the present invention;
FIG. 10 is a timing chart between a PWM triangular wave and a resolver excitation signal according to the first embodiment of the present' invention;
FIG. 11 is a main flowchart representing the operation of the power steering control device according to the first embodiment of the present invention;
FIG. 12 is a flowchart representing an A/D conversion interrupts processing according to the first embodiment of the present invention;
FIG. 13 is a timing chart of an A/D start timer, a control start timer, and the PWM triangular wave according to the first embodiment of the present invention;
FIG. 14 is a timing chart of an A/D start timer, a control start timer, and the PWM triangular wave according to a second embodiment of the present invention; and
FIG. 15 is a timing chart of an A/D start timer, a control start timer, and the PWM triangular wave according to a third embodiment of the present invention.

### DESCRIPTION OF THE PREFERRED EMBODIMENTS

The best modes of carrying out the present invention will be described below with reference to the drawings.

### (First Embodiment)

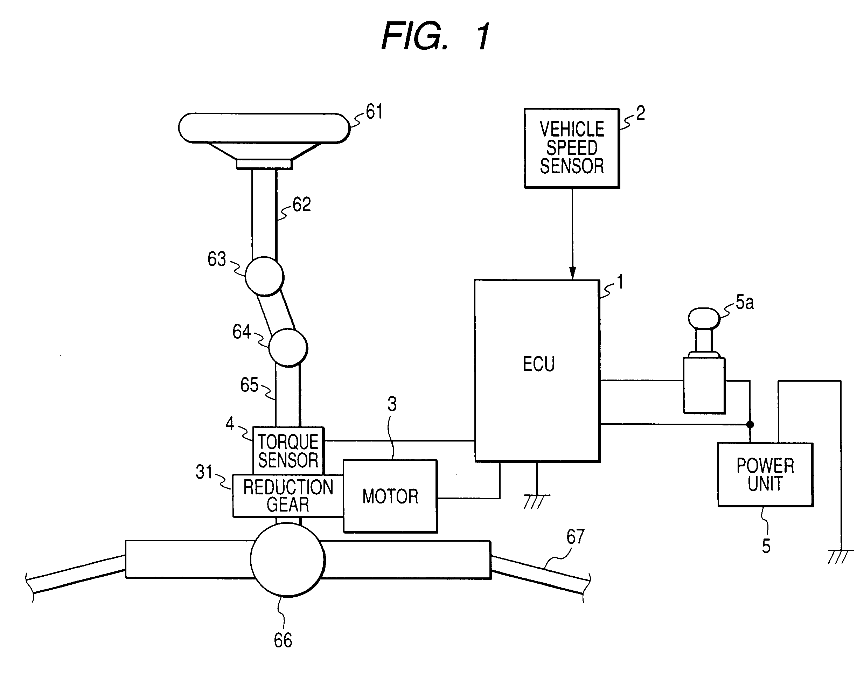

FIG. 1 is a schematic diagram of an electric power steering device according to the present embodiment. In this Figure, a steering 61 is connected to a rack and pinion 66 through a steering shaft 62, universal joints 63 and 64, and a shaft 65. Further, the rack and pinion 66 is provided with tierods 67 of wheels, and the rotational motion of the handle 61 is configured to be converted into the motion in the axial direction of the tie-rod 67.

The shaft 65 is provided with a torque sensor 4, and the torque sensor 4 detects a steering torque applied to the steering 61, and can output a torque signal. Further, the shaft 65 is attached with a reduction gear 31 and a motor 3, and the running torque of the motor 3 is transmitted to the shaft 65 through the reduction gear 31.

An ECU 1, as described above, calculates a power assist steering torque based on the torque signal from the torque sensor 4 and a speed signal from a speed sensor 2, and transmits a driving current based on this calculation result to the motor 3. The ECU 1 is connected with a power unit 5, and by turning on an ignition key 5a, a relay inside the ECU 1 is configured to be turned on, so that the current is supplied to the ECU 1.

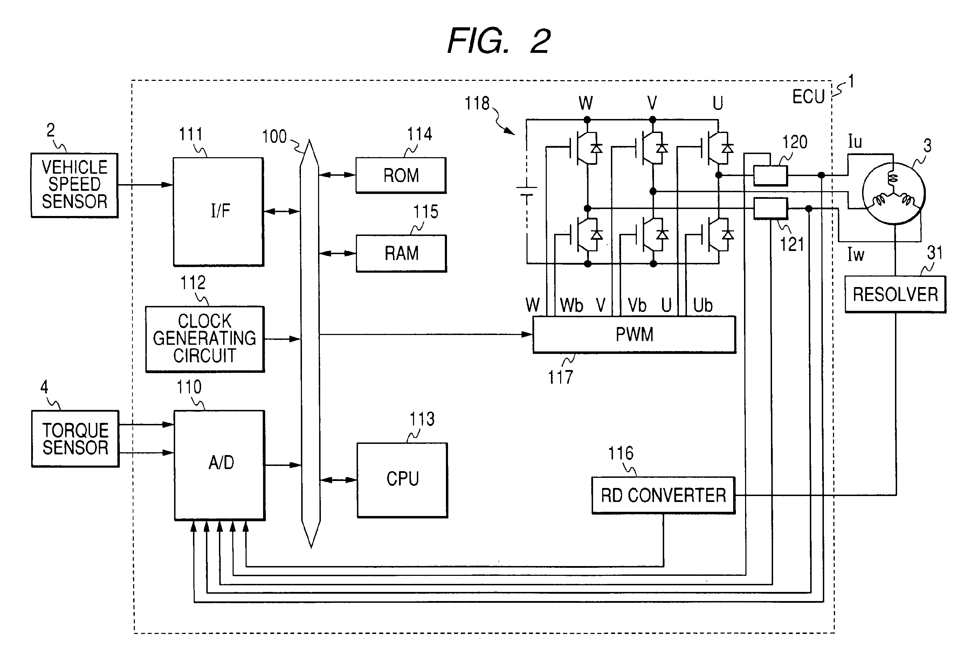

FIG. 2 is a block diagram representing a hardware configuration of the ECU 1. The ECU 1 is configured by comprising a bus 100, an A/D converter 110, an interface 111, a clock generating circuit 112, a CPU 113, a ROM 114, a RAM 115, a RD converter 116, a PWM controller 117, a motor driving circuit 118, and motor current detection circuits 120 and 121.

The bus 100 performs a transmission and a reception of the data among the A/D converter 110, the I/F 111, the clock generating circuit 112, the CPU 113, the ROM 114, the RAM 115, and the like. The A/D converter 110 inputs a main torque signal and a sub torque signal outputted from the torque sensor 4, a detection current from motor current detection circuits 120 and 121, a motor rotation angle signal from the RD converter 116, and a terminal voltage of the motor 3, and converts them into digital signals.

The torque sensor 4 comprises two output signals of the main torque signal and the sub torque signal , and a total voltage of these signals is set so as to become a cross characteristic, which is a constant voltage (for example, 5 V). That is, in case a torque is not applied on the steering, the main torque signal and the sub torque signal become a torque neutral voltage 2.5V, respectively, and in case whatever torque is applied on the steering, the main torque signal and the sub torque signal are fluctuated into a reverse direction to each other with the neutral signal voltage 2.5V as a reference.

The interface 111 counts a speed pulse from the speed sensor 2, and converts it into a digital signal. The ROM 114 is used as a memory to store a control program of the motor 3, a calculation program of a PWM, a fail safe program, and the like, and the RAM 115 is used as a work memory to actuate the program.

The PWM controller 117 converts the signal representing the torque of the motor 3 into pulse signals W, V, U, Wb, Vb, and Ub, each signal being modulated in width. Here, the pulse signals W, V and U represent a three-phase signal of the normal phase, and the pulse signals Wb, Vb, and Ub represent a three phase signal of the reverse phase.

The motor driving circuit 118 is configured by three inverter circuits to generate a three phase current of a WVU, and each inverter circuit has a switching transistor of the power voltage side (the upper stage)and a switching transistor of an earth potential side (the lower stage). The gate of the upper stage switching transistor is inputted with the normal phase pulse signals W, V, and U, and the lower stage switching transistor is inputted with the reverse phase pulse signals Wb, Vb, and Ub. That is, the upper and lower stage switching transistors are complementarily connected, and alternately repeat on and off operations, so that driving currents Iu, Iv, and Iw having a desired pulse width are generated. A time (dead time) when both transistors are tuned on so that the upper stage switching transistor and the lower stage switching transistor are not turned on and off simultaneously is provided before and behind a on-time of the pulse signals Wb, Vb, and Ub in a phase reverse to the normal phase signals W, V, and U. By providing the dead time in this manner, the short-circuit of the upper and lower stage switching transistors can be avoided.

The motor current detection circuits 120 and 121 are configured by a current-voltage conversion element such as a resistor, and detect the driving currents Iu and Iw toward the motor 3, and can output the voltage according to the current to the A/D converter 110. The RD converter 116 gives an excitation current to the resolver 31, and at the same time, has a function to output the output signal from the resolver 31 to the A/D converter 110 as a rotation angle signal.

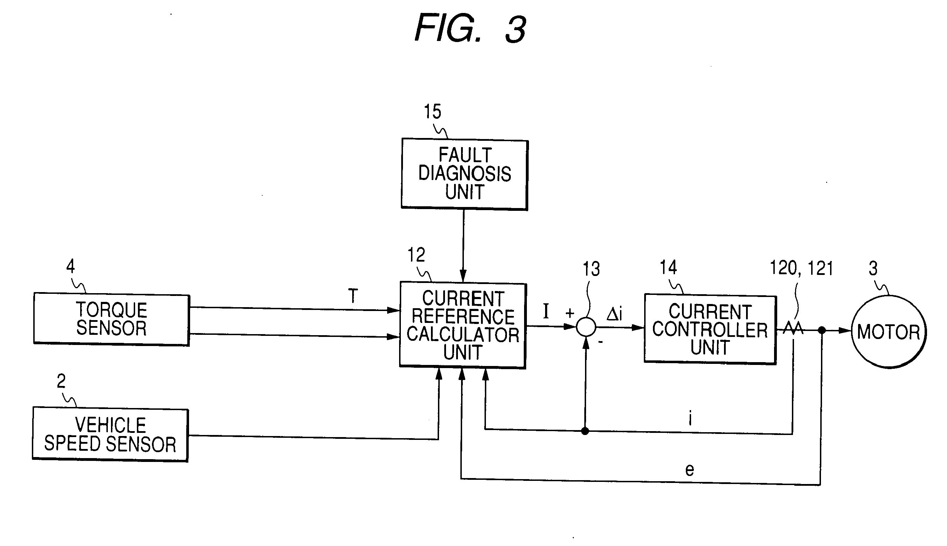

In FIG. 3 is shown a functional block diagram of the ECU 1. In this Figure, a current command value calculation unit 12, an adder 13, a current control unit 14, and a trouble shooting unit 15 function by the CPU 113 inside the ECU 1.

The current command value calculation unit 12 has a function to calculate a current command value I based on a torque signal T, a speed signal, a detection current i of the motor, a steering angle signal, and a detection voltage e. This current command value I represents a driving current value to be supplied to the motor 3, and a control is made so as to supply the driving current equal to the current command value I to the motor 3. Further, the current command value calculation unit 12 is inputted with a speed pulse from the speed sensor 2, and can decide a power assist steering force according to the speed.

Further, the current command value calculation unit 12 has handle return compensation and a motor maximum current control. For example, the handle return compensation performs a control to restore the steering 61 to a neutral position. In general, in the electric power steering, a self aligning torque is prone to become weak due to the effect of the reduction gear 31 and the like, and therefore, the handle becomes difficult to return to the neutral position. Hence, the terminal voltage e of the motor when the motor 3 is rotated by the operation of the self aligning torque and the motor current I are detected, so that a motor angle speed is detected, and the compensation current value to restore the handle to the neutral position is calculated.

The motor current detection circuits 120 and 121 detect the current supplied to the motor 3, and output a signal of the detection current i. This detection current i is fed back to the adder 13, and at the same time, it is inputted to the current command value calculation unit 12. The adder 13 calculates a deviation Δi between the detection current i and the current command value I, and outputs it to the current control unit 14.

The current control unit 14 is configured by a differential computing unit, a proportional computing unit, and an integration computing unit, and has a function to perform a control so that the deviation △I becomes zero. The differential calculation unit is provided to improve a response speed of the control, and the proportion calculation unit performs a multiplication of the deviation Δi by a predetermined proportional coefficient. Further, the integration calculation unit calculates an integral value by a time axis of the deviation Δi and performs a control so that the stationary value of the deviation Δi becomes zero.

The trouble shooting unit 15 detects anomaly of the motor 3, the torque sensor 4, and the like, and executes a predetermined fail-safe processing. For example, in case the trouble shooting unit 10 detects anomaly of the torque sensor 4, an instruction can be given to the current command value calculation unit 12 that an interrupt be generated, and progressive reduction of a power assist torque be performed.

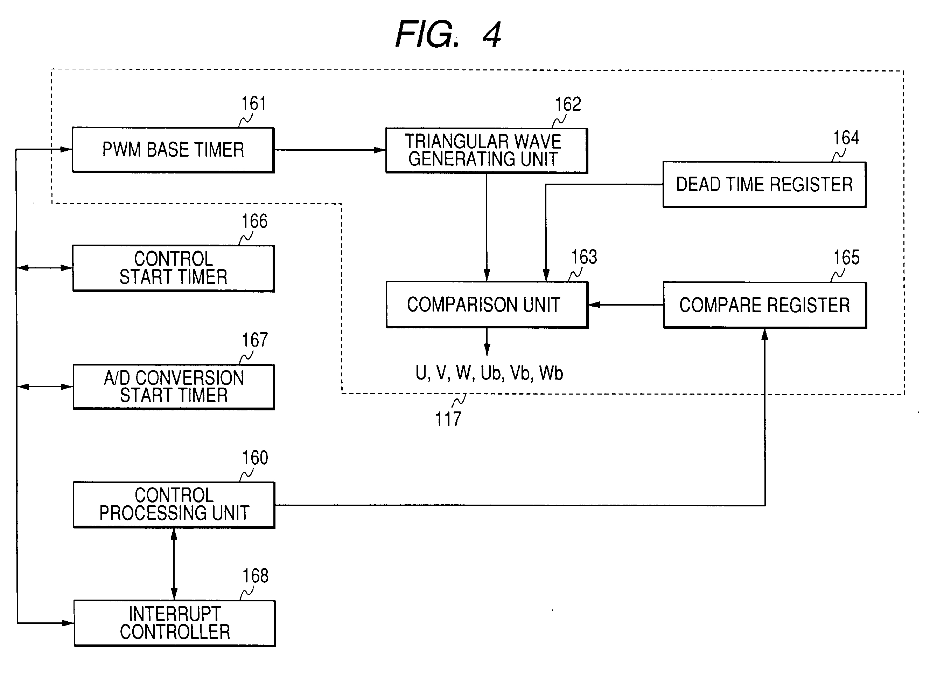

FIG. 4 is a functional block diagram of the PWM controller 117. The PWM controller 117 is configured by comprising a PWM base timer 161, a triangular generating unit 162, a comparison unit 163, a dead time register 164, and a compare register 165. The PWM base timer 161 calculates a cycle of the PWM base wave (carrier) by counting a clock frequency. Since the ECU for automobile use is generally executed at one msec, it is desirable that the cycle of the PWM base wave, for example, is set to 50 µsec so that the integral multiple of the cycle of the PWM base wave becomes one msec.

The triangular wave generating unit 162 generates a triangular wave, which is a PWM base wave, based on the value counted by the PWM base timer 161. The compare register 165 is a register to store a data of a PWM duty ratio, and is configured by three registers by each of the W, V and U phases. The PWM duty ratio represents the control target current value of the motor, and is given from the control processing unit 160 for every 50 µsec. The dead time register 164 is a register to store a data representing the dead time. That is, by changing the value of the dead time register 164, a desired dead time can be set.

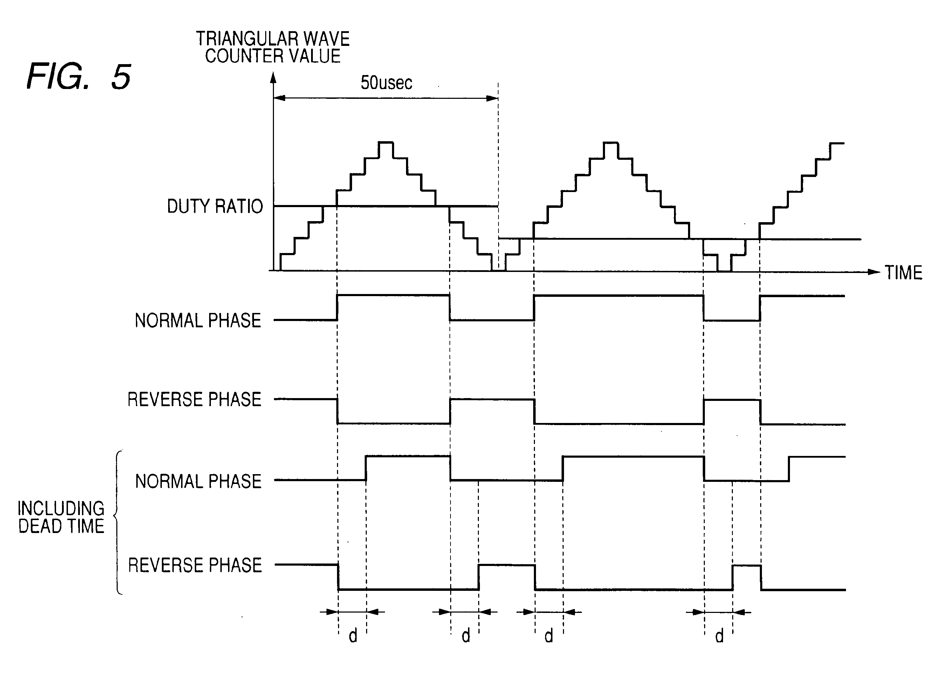

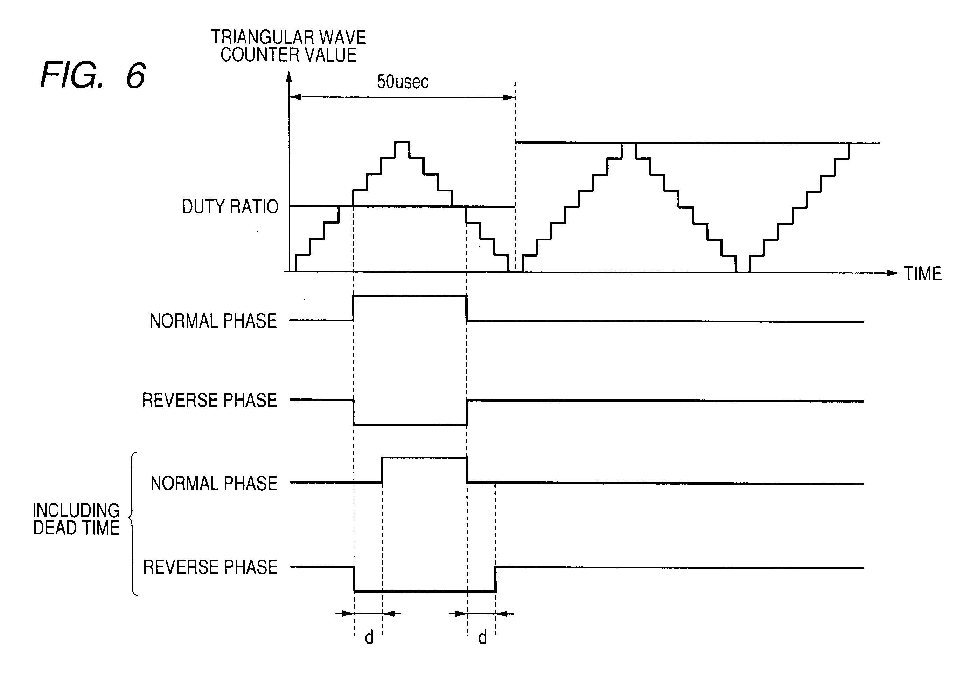

The comparison unit 163 compares the triangular wave generated by the triangular generating unit 162 and the duty ratio stored in the compare register 165, and generates the pulse signals W, V, U, Wb, Vb, and Ub having a predetermined width. For example, as shown in FIGS. 5 and 6, based on the size of the triangular wave and the duty ratio, the pulses of the normal phase and the reverse phase are generated.
The cycle of the triangular wave, which is the PWM base wave, is, for example, set to 50 µsec. As described above, the value of the compare register 165 is rewritten by the control processing unit 160 to a timing (wave peak to wave trough of the triangular wave) where the cycle (for example, 250 µsec) of plural times the PWM base wave is decided. The comparison unit 163 compares the duty ratio and the triangular wave stored in the compare resistor 165, and outputs a pulse signal of a pulse width (for example, 5 µsec) according to the duty ratio. The renewal cycle of the duty ratio of the compare register 165 or the duty register (not shown) is desirable to be shorter than the calculation cycle of the duty by the control processing unit 165. In this manner, a stabilized control can be performed.

In FIGS. 5 and 6, the duty ratio of the compare register 165 changes from 50% to 25%, and it can be confirmed that the pulse width is also changed similarly. Further, FIG. 6 represents a pulse signal in case the duty ratio changes from 50% to 100%.

Further, the compare unit 163 adds a dead time corresponding to the value of the dead time register 164 to the pulse signal. That is, as shown in FIGS. 5 and 6, the compare unit 163 shifts a rising time of the normal phase and a rising time of the reverse phase by a predetermined time d, thereby providing a dead time d. In this manner, the pulse signals of the normal phase and the reverse phase can be prevented from being simultaneously turned on.

The control start timer 166 is a timer to decide the start of the calculation processing of the motor driving current. The control start timer 166 is synchronized with the PWM base timer 161, and is reset by the cycle of five times (250 µsec) the cycle 50 µsec of the PWM base timer 161. Further, the control start timer 166 has an initial timer value set so that interrupt is generated at the A/D conversion completing time. Further, an A/D start timer 160 is a timer to decide the start time of the A/D conversion. For example, the A/D start timer 167 is rest by a timing of the peak or the trough of the triangular wave, and a timer rest cycle is desirable to be set to five times (250 µsec) the cycle of the triangular wave. That is, the A/D start timer 160 generates the A/D start interrupt at the cycle of 250 µsec of five times the cycle of the triangular wave and at the trough time of the triangular wave. In this manner, the start time of the A/D conversion is synchronized with the peak or trough of the triangular wave, so that the generation of unnecessary interrupt processing is controlled, and the load on the calculation device can be reduced.

Further, in the present embodiment, in case the A/D converter 110 can A/D convert signals of a plurality of channels, the A/D conversion of all the channels is desirable to be completed within half a cycle of the PWM base wave. In this manner, a stabilized control can be made, and furthermore, the timing of the A/D conversion processing can be easily controlled.

Further, in case the processing cycle of the control processing unit 165 is taken as Ts, the value of Ts may be set so that 1/Ts becomes divisible. By setting the Ts to such a value, the coefficient of a digital filter used in the control processing unit 165 can be represented by the fewer effective number of digits, and an error of the filter coefficient recorded in the ROM and the like can be made fewer.

Where the duty ratio of the pulse signal is in the vicinity of 0% and 100%, the pulse widths of the pulse signals W, V, U, Wb, Vb, and Ub become the short time to the extent of the dead time. Hence, the time required for the A/D conversion of the motor terminal voltage and the like is also desirable to be short to the utmost, and the A/D conversion is preferably completed at least within a time to the same extent of the dead time. For example, in case the dead time is 3 µmsec., the A/D conversion processing time can be also similarly set to the extent of 3 µsec. If the A/D conversion is not completed within the time, the A/D conversion is forcibly completed, and it may be determined that anomaly has occurred.

An interrupt controller 1.68 controls the interrupt processing, and performs establishment of the priority, permission, non-permission of each interrupt processing such as a hardware interrupt and the like in addition to timer interrupts by the PWM base timer 161, the control start timer 166, the A/D interrupt timer 167, and the like. For example, when the timer interrupt by the control start timer 166 occurs, the interrupt controller 168 allows the control processing unit 160 to execute the calculation control of the driving current, and when the timer interrupt by the A/D start timer 167 occurs, the interrupt controller 168 allows the control processing unit 160 to perform the interrupt processing of the A/D conversion processing. Further, the priority of the control start timer 166 is established higher than the priority of the A/D start timer 167, and in case the interrupt processings of both timers compete with each other, the interrupt controller 168 allows the interrupt of the control start timer 166 to be preferentially processed.

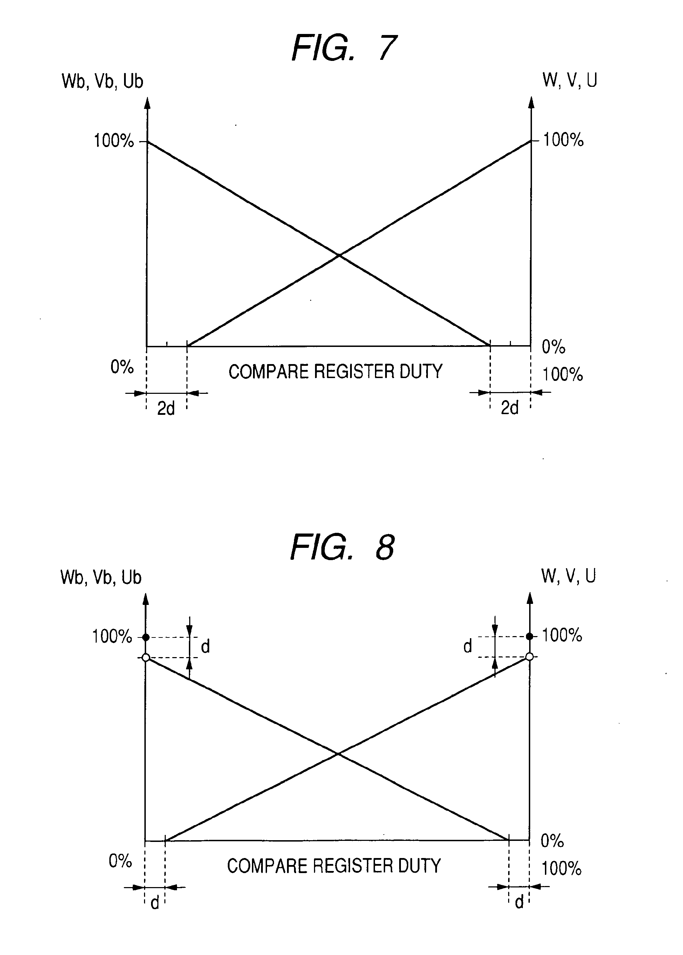

FIGS. 7 and 8 are graphs representing the input and output characteristics of two different PWM controllers. In these Figures, an axis of abscissas represents a duty ratio in the compare register 156, and a right axis of ordinate represents duty ratios of the normal pulse signals W, V, and U, and a left axis of ordinate represents duty ratios of the reverse phase pulse signals Wb, Vb, and Ub. Further, in these Figures, "d" represents a range of a duty ratio equivalent to the dead time.

In the PWM controller shown in FIG. 7, when duty ratios of either the pulse signals W, V, and U or the pulse signals Wb, Vb, and Ub draw near to 100%, the other ratios become on or off. In this range, the switching noise by the switching transistor is relatively few, and the effect of the switching noise at the A/D conversion time becomes few. Consequently, by completing the A/D conversion at least within the time of the dead time d x 2, the effect of the switching noise at the A/D conversion time can be avoided.

In the PWM controller shown in FIG. 8, in the duty ratios 100% of the pulse signals W, V, and U or the pulse signals Wb, Vb, and Ub are 100%, though there exists discontinuity, in the range of the dead time d other than this discontinuity, the pulse signals become on or off. Hence, by completing the A/D conversion within the time of the dead time d, the effect of the switching noise at the A/D conversion time can be avoided.

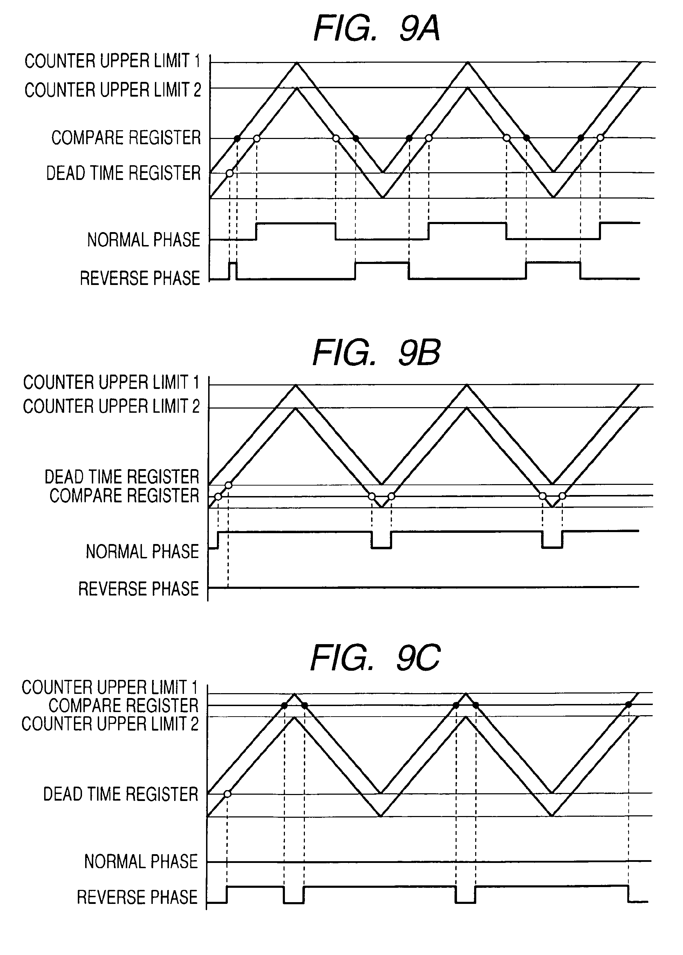

FIGS. 9A, 9B and 9C are timing chart representing a relation between the triangular wave and the pulse signal. In FIG. 9A, the upper side triangular wave is a wave added with the value of the dead time register as against the lower side triangular wave. The counter upper limit 1 represents the counter upper limit value of the upper side triangular wave, and the counter upper limit 2 represents the counter upper limit value of the lower side triangular wave. By comparing the values of the upper side triangular wave and the compare register, the normal phase pulse and the reversal pulse added with the dead time can be generated.

FIG. 9B represents various types of wave forms in case the value of the compare register is smaller than the value of the dead time register. In this case, by comparing the values of the lower side triangular wave and the compare register, the pulses of the normal phase and the reverse phase are generated. Further, as shown in FIG. 9C, in case the value of the compare register is located between the counter upper limit 2 and the counter upper limit 1, by comparing the values of the upper side triangular wave and the compare register, the pulses of the normal phase and the reverse phase are generated.

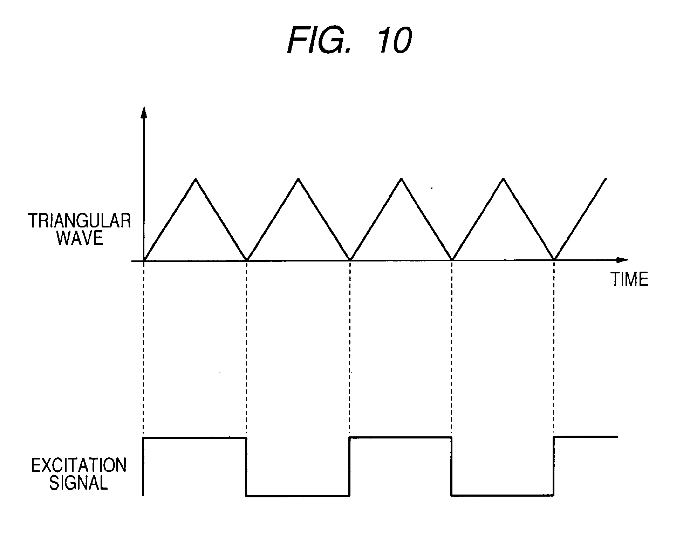

FIG. 10 represents the wave forms of the triangular wave formed by the triangular generating unit 162 and the excitation signal of the resolver 31. According to the present embodiment, the excitation signal is a pulse signal of the duty 50% synchronized with the triangular wave, where the peak of the triangular wave and the pulse portion of the excitation signal correspond to each other. In this manner, by synchronizing the triangular wave with the excitation signal, the A/D conversion of the detection signal of the resolver 31 can be performed at the same timing as the A/D conversion of other signals. That is, by allowing the A/D conversion timing of the detection signal of the resolver 31 to correspond to the A/D conversion timing of other signals, the interrupt for the A/D conversion can be controlled to the minimum, and stability of the system can be enhanced.

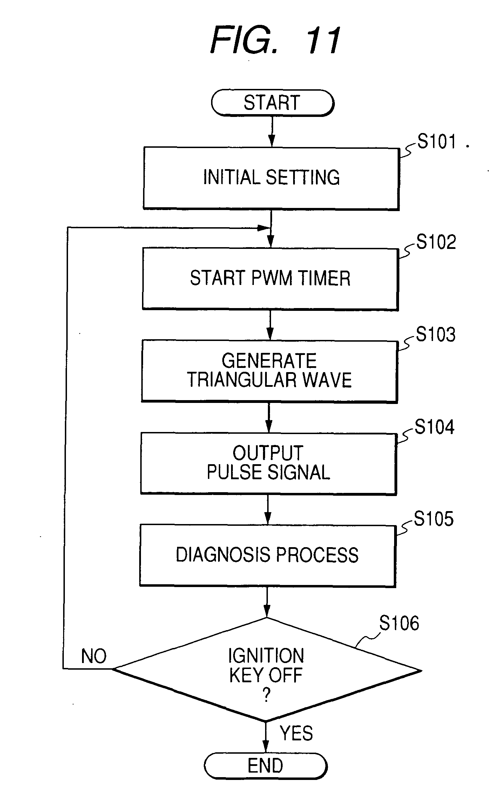

Subsequently, the operation of the power steering control device according to the present embodiment will be described. FIG. 11 is a main flowchart representing the operation of the power steering control device. In this flowchart, the CPU 113 first sets the values of various timers and registers to initial values (step S101). That is, the ECU 1 resets the PWM base timer 161, the control start timer 166, and the A/D start timer 167, and at the same time, writes the value of a desired dead time into the dead time register 164.

After that, the PWM base timer 161 starts (step S101), and the triangular wave generating unit 162 generates a triangular wave based on the value of the timer (step S103). The comparison unit 163 outputs the pulse signals W, V, U, Wb, Vb, and Ub based on the duty ratio stored in the comparison register 165 and the value of the dead time stored in the dead time register 164 (step S104). The motor driving circuit 118 supplies the driving current based on the pulse signals W, V, U, Wb, Vb, and Ub to the motor 3, so that the power assist torque is generated by the motor 3.

Further, the CPU 113 performs the trouble shooting processing of the power steering device, and executes the predetermined fail safe processing in case a trouble is detected (step S105). The ECU 1 repeats the processings of steps S101 to S105 until the ignition key 5a is turned off, so that a control of the power steering device is performed.

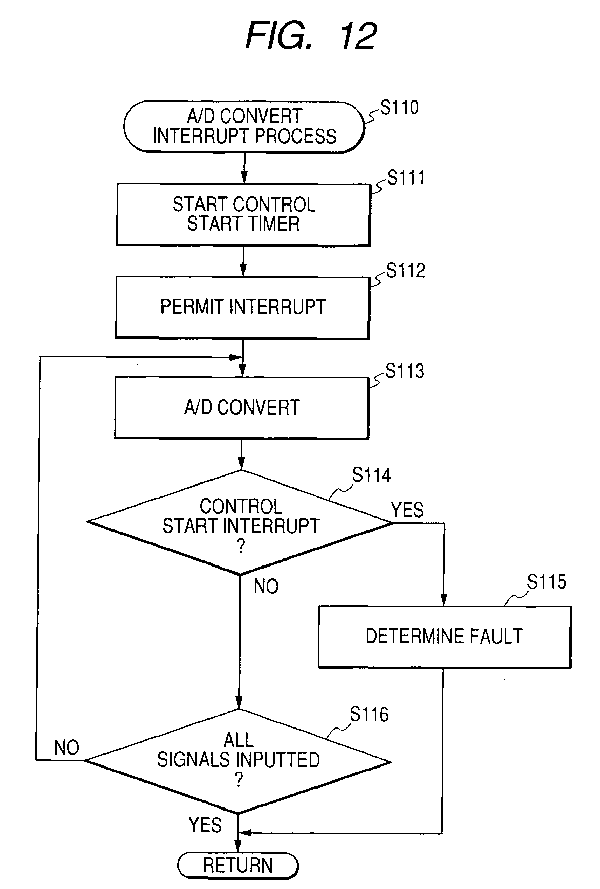

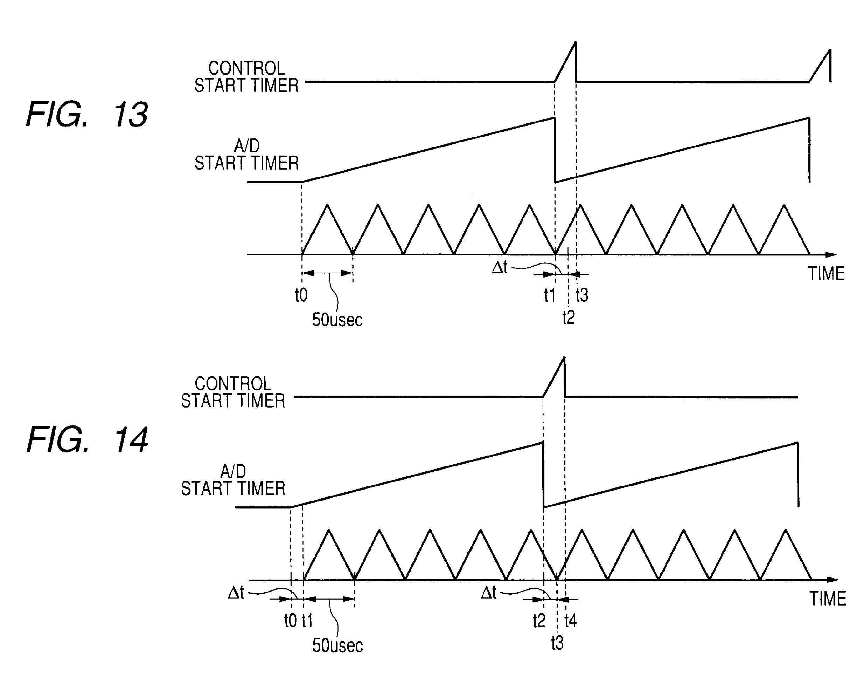

FIG. 12 is a flowchart representing the interrupt processing of the A/D conversion. This interrupt processing is executed in case the interrupt occurs by the A/D start timer 160 in the above described flowchart. Further, FIG. 13 is a timing chart of the triangular wave and the interrupt timer. The A/D conversion interrupt processing will be described with reference to FIGS. 12 and 13.

First, the interrupt timer has the PWM base timer 161 and the A/D start timer 167 simultaneously started in a time t0. The triangular wave generating unit 162 generates a triangular wave of 50 µsec cycle based on the PWM base timer 161, and the A/D start timer 167 repeats UP and DOWN at 250 µsec cycle.
That is, when the A/D start timer 167 counts 250 µsec (time t1), the interrupt controller 168 generates an interrupt for the control processing unit 160 (time t1, step S110). At the same time, the control start timer 166 to decide the control start timing starts (step S111).

From when the interrupt occurs until the control processing unit 160 actually executes the A/D conversion processing, a predetermined delay time Δt is required due to factors such as an overhead and the like, and the control processing unit 160 starts the A/D conversion processing at a time t2 (step S113). If the A/D conversion processing does not complete the processing within a prescribed time, that is, if the processing is not completed (YES at step S114) until the interrupt by the control start timer 168 occurs (t2 to t3), it is determined as anomaly or the A/D conversion is forcibly completed(step S115). In this case, from among the torque signal, the motor driving current, the motor terminal voltage, and the resolver detection signal, all of which are the objects of the A/D conversion, the A/D conversion is desirable to be performed in the order of ascending priorities in the control.
For example, prior to the A/D conversion of the motor terminal voltage, the A/D conversion of the motor driving current is preferably performed. When the A/D conversion for all the signals is completed (YES at step S116), the processing returns to the main flowchart of FIG. 11.

As described above, it is desirable that the time required for the A/D conversion of each signal is smaller than the dead time d. Where the duty ratio of the pulse signal of the PWM is in the vicinity of 0% and 100%, since the time in which the voltage is stabilized becomes shorter than the extent of the dead time, by performing the A/D conversion within this time, the effect of the switching noise can be avoided.

After the A/D conversion processing, when the interrupt by the control start timer 166 occurs (time t3, YES at step S114), the control processing unit 160 starts a control calculation based on the torque signal and the like subjected to the A/D conversion. Based on the calculation result, the compare register 165 is rewritten, and the predetermined pulse width signals W, V, U, Wb, Vb, and Ub are outputted from the comparison unit 163. As a result, the driving current is supplied to the motor 3, and the power assist torque is applied on the steering shaft.

Similarly, after 250 µsec elapses from the time t1, the interrupt by the A/D start timer 167 occurs, and the A/D conversion processing and the control processing are executed, and the compare register 165 is rewritten. In this manner, the compare register 165 is rewritten for every 250 µsec.

In the present embodiment, the interrupt processing permitted in addition to the above described interrupt processing is only an exceptional interrupt processing such as a power on reset and the like. In this manner, by limiting the interrupt processing, an unnecessary interrupt can be controlled to the minimum. Further, in case a plurality of interrupts are permitted, the priority of the interrupt by the control start timer is raised to the highest, so that stabilized control can be realized.

As described above, according to the present embodiment, the A/D conversion and the control processing are executed for every plurality of cycles of the PWM timer, so that the number of interrupt processings can be controlled to the minimum, and the processing load on the control device can be reduced. Further, the A/D conversion is executed within the dead time, so that the effect of the switching noise and the like can be avoided.

### (Second Embodiment)

FIG. 14 represents a timing chart of a power steering device according to a second embodiment of the present invention. According to the present embodiment, an A/D start timer 167 starts at a time t0 faster than a start time t1 of a PWM base timer 161 by a delay time At required for an A/D conversion of a triangular wave. After 250 µsec elapses from a time t0, an interrupt by the A/D start timer 167 occurs (time t2), and moreover, after the delay time At elapses, an A/D conversion processing is executed (time t3). That is, in consideration of an overhead time of the A/D conversion, an A/D start interrupt time is quickened so as to be matched with an actual A/D conversion start time and a trough time of the triangular wave can be matched.

A control start timer 166, after starting at the time t2, generates an interrupt at a time t4. A control processing unit 160 calculates a torque signal subjected to the A/D conversion and a duty ratio representing a current command value based on a motor current and the like, and outputs them to a compare register 168. With respect to other configurations, since they are the same as the power steering control device according to the first embodiment, the description thereof will be omitted.

In the present embodiment also, the A/D conversion and the control processing are executed for every plurality of cycles of the triangular wave of the PWM, so that the number of interrupt processings can be controlled to the minimum. Further, in consideration of the delay time Δt, an A/D conversion start interrupt is generated, so that the A/D conversion can be accurately executed at the trough time of the triangular wave.

### (Third Embodiment)

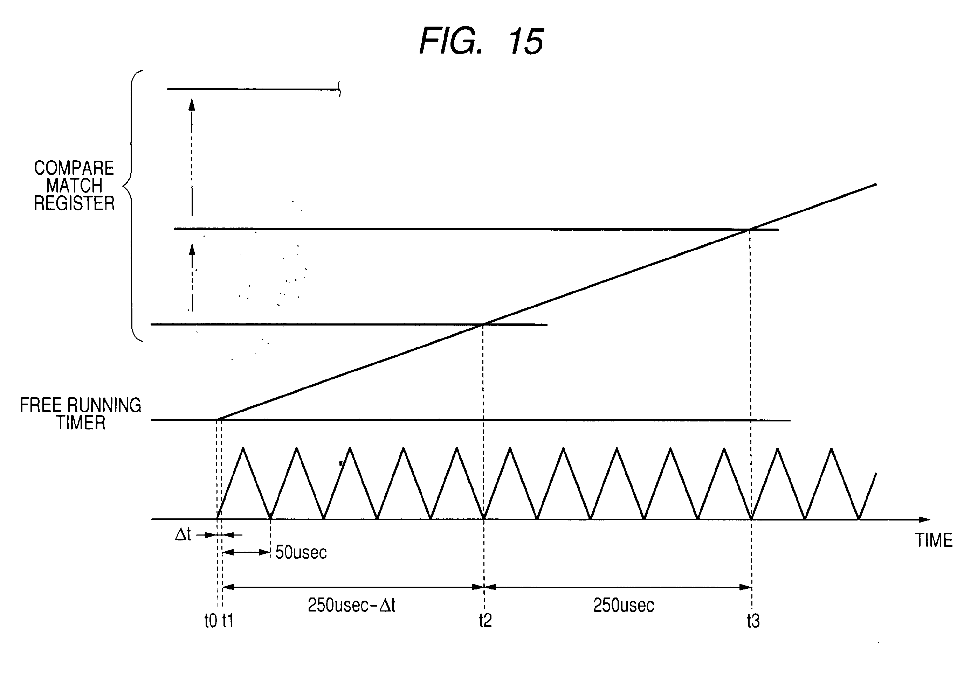

FIG. 15 represents a timing chart of a power steering control device according to a third embodiment of the present invention. In the present embodiment, by comparing a free running timer and a compare match register, an interrupt of 250 µsec cycle can be generated. The free running timer starts at a time t1 shifted by a predetermined delay time At from the initialization (time t0) of a PWM base timer 161. The delay time At is decided by allowing an actual program to be executed so as to measure the delay time of the system operation. In case the compare match register and the free running timer are matched, an interrupt occurs (time t2), and an A/D conversion and a control processing are subsequently executed. Simultaneously when the interrupt occurs, the compare match register is rewritten, and moreover, after 250 µsec, an interrupt is generated (time t3). With respect to other configurations, since they are the same as the first embodiment, the description thereof will be omitted.

According to the present embodiment, by using the free running timer and the compare match register, the interrupt processing synchronized with a triangular wave of the PWM can be realized. In this manner, unnecessary interrupt can be controlled, and the processing load on the device can be reduced.

While the present embodiment has been described as above, the embodiment can be modified without being tied to the above described configuration in the scope not departing from the spirit of the present invention. For example, the base wave of the PWM is not limited to the triangular wave, and it may be a saw tooth wave. In this case, the interrupt of the A/D conversion, the control processing, and the like can be generated so as to be synchronized with the rising or falling time of the saw tooth wave.

Further, the power steering device according to the present embodiment, regardless of whether it is a column type or rack type, can be also adapted to a hydraulic power steering device. Further, the mode of the program is not limited to the above described flowchart, but can be changed if the similar function can be realized.

This application claims priority from Japanese Patent Application No. 2004-346726 filed November 30, 2004, which is hereby incorporated by reference herein.

## Claims

1. A power steering control device, which calculates the control target current value of driving current to drive a motor based on a steering torque applied on a steering, and at the same time, applies a PWM driving current modulated in pulse width on the steering by using a predetermined PWM base wave based on the control target current value, comprising:
reading means to read at least one of a torque signal representing said steering torque, a signal representing said PWM driving current, and a signal representing a terminal voltage of said motor; and
control processing means to calculate said target current value based on the signal read by said reading means,
wherein said reading means and said control processing means execute the processing for every plurality of cycles of said PWM base wave.

2. A power steering control device according to claim 1, wherein said reading means and said control processing means execute the processing for every plurality of cycles of said PWM base wave and in a constant timing in said PWM base wave.

3. A power steering control device according to claim 1, wherein at least either of said reading means and said control processing means starts the processing by an interrupt processing.

4. A power steering control device according to claim 1 wherein said control processing means executes the processing after the processing in said reading means is completed.

5. A power steering control device according to claim 1, wherein said reading means determines anomaly of the processing in case the processing is not completed within a predetermined time.

6. A power steering control device according to claim 1, an excitation signal synchronized with said PWM base wave is supplied to a resolver provided in said motor, and a detection signal from said resolver is read by said reading means.

7. A power steering control device according to claim 1, wherein said reading means is comprised of an A/D converter.

8. A power steering control device according to claim 1, wherein integral multiples of the cycle of said PWM base wave are approximately one msec.

9. A power steering control device, comprising:
an A/D converter to A/D convert at least either of a torque signal from a torque sensor to detect a steering torque applied on a steering, and a driving current signal representing a driving current toward a power assist torque generating motor;
a control processing unit to calculate a control target current value based on said torque signal and said driving current signal;
a PWM controller to generate normal phase and reverse phase PWM pulse signals by using the PWM base wave of a predetermined frequency based on said control target current value, and at the same time, adding a dead time in which said two switch elements are simultaneously turned off to said normal phase and/or reverse phase PWM pulse signals;
a duty command value calculation unit to calculate a PWM duty command value according to said control target value; and
a current driving circuit connected between a high potential and a low potential, and at the same time, comprising at least two switch elements to generate said driving current by performing a power assist operation based on said PWM pulse signal,
wherein said A/D converter executes an A/D conversion within a time equivalent to said dead time.

10. A power steering control device according to claim 9, wherein said A/D converter executes the processing for every plurality of cycles of said PWM base wave and in a constant timing in said PWM base wave.

11. A power steering control device according to claim 10, wherein said control processing unit starts the processing after the processing in said A/D converter is completed.

12. A power steering control device according to claim 11,
wherein said control processing unit renews a control target current value for every plurality of cycles of said PWM base wave.

13. A power steering control device according to claim 9, wherein integral multiples of the cycle of said PWM base wave are approximately one msec.

14. A power steering control device according to claim 9, wherein an inverse of the execution cycle of said control processing unit is divisible.

15. A power steering control device according to claim 9, wherein a duty register to decide a duty of said PWM base wave is provided, and a renewal cycle of the duty register is shorter than a duty calculation cycle by said control processing means.

16. A power steering control device, which calculates the control target current value of driving current to drive a motor based on a steering torque applied on a steering, and at the same time, applies a PWM driving current modulated in pulse width on the steering by using a predetermined PWM base wave based on the control target current value, comprising:
reading means to A/D convert and read at least one of a torque signal representing said steering torque, a signal representing said PWM driving current, and a signal representing a terminal voltage of said motor; and
control processing means to calculate said target current value based on the signal read by said reading means,
wherein said reading means completes an A/D conversion within a time below half a time of the cycle of said PWM base wave.

17. A power steering control method, which calculates the driving target current value to drive a motor based on a steering torque applied on a steering, and at the same time, applies a PWM driving current modulated in pulse width on the steering by using a predetermined PWM base wave, based on the control target current value, comprising:
a reading step to read at least one of a torque signal representing said steering torque, a signal representing said PWM driving current, and a signal representing a terminal voltage of said motor; and
a control processing step to calculate said target current value based on the signal ready by said reading step,
wherein said reading step and said control processing step execute the processing for every plurality of cycles of said PWM base wave.

18. A power steering control method, executing:
a step of A/D converting at least either of a torque signal from a torque sensor to detect a steering torque applied on a steering, and a driving current signal representing a driving current toward a power assist torque generating motor by using an A/D converter;
a control processing step of calculating a control target current value based on said torque signal and said driving current signal;
a step of generating normal phase and reverse phase PWM pulse signals by using the PWM base wave of a predetermined frequency based on said control target current value, and at the same time, adding a dead time in which said two switch elements are simultaneously turned off to said normal phase and/or reverse phase PWM pulse signals;
a step of calculating a PWM duty command value according to said control target value; and
a step of driving a current driving circuit connected between a high potential and a low potential, and at the same time, comprising at least two switch elements to generate said driving current by performing a power assist operation based on said PWM pulse signal,
wherein said A/D converter executes an A/D conversion within a time equivalent to said dead time.

19. A power steering control method, which calculates a control target current value of driving current to drive a motor based on a steering torque applied on a steering, and at the same time, applies a PWM driving current modulated in pulse width on the steering by using a predetermined PWM base wave based on the control target current value, comprising:
a reading step of A/D converting and reading at least one of a torque signal representing said steering torque, a signal representing said PWM driving current, and a signal representing a terminal voltage of said motor; and
a control processing step of calculating said target current value based on the signal read by said reading means,
wherein said reading means completes an A/D conversion within a time below half a time of a cycle of said PWM base wave.

20. A power steering control device, arranged to calculate a target value for a current to be applied to a motor in a power steering apparatus, said device arranged to modulate the current using a base wave which cyclically repeats according to a predetermined base wave time period, said device comprising:
signal reading means arranged to periodically read at least one signal according to a cyclical signal reading time period; and
control processing means arranged to periodically calculate said target value, based upon said at least one signal, according to a cyclical calculation time period,
said cyclical signal reading time period and said cyclical calculation time period being integer multiples of said base wave time period.

21. A power steering control device according to claim 20, wherein said cyclical signal reading time period and said cyclical calculation time period are five times the base wave time period.
